# EUROPEAN PATENT SPECIFICATION

(11) **EP 2 889 516 B1**
(45) Date of publication and mention of the grant of the patent: **09.11.2016**
(21) Application number: 14156405.4
(22) Date of filing: 24.02.2014
(51) Int. Cl.: F16H 61/448, F03D 9/00

(54) **A HYDRAULIC TRANSMISSION AND A POWER GENERATING APPARATUS OF A RENEWABLE ENERGY TYPE**
Hydraulische Übertragung und Stromerzeugungsvorrichtung mit erneuerbarer Energie
Transmission hydraulique et appareil de génération d'énergie d'un type d'énergie renouvelable

(30) Priority: 27.12.2013 JP 2013272841
(43) Date of publication of application: 01.07.2015
(73) Proprietor: MITSUBISHI HEAVY INDUSTRIES, LTD., Tokyo 108-8215 (JP)
(72) Inventor: Koyanagi, Takuya, TOKYO, 108-8215 (JP); Iwasaki, Satoshi, TOKYO, 108-8215 (JP); Tsutsumi, Kazuhisa, TOKYO, 108-8215 (JP); Dumnov, Daniil, LOANHEAD, MIDLOTHIAN, LOTHIAN, EH20 9TB (GB); Caldwell, Niall, LOANHEAD, MIDLOTHIAN, LOTHIAN, EH20 9TB (GB)
(74) Representative: Intès, Didier Gérard André

(56) References cited:
- EP-A1- 2 261 503
- EP-A2- 2 312 185
- WO-A1-2012/164789
- WO-A2-2011/003405
- US-A1- 2006 021 813
- US-A1- 2009 288 406

## Description

### Technical Field

The present disclosure relates to a hydraulic transmission, an operation method thereof and a power generating apparatus of a renewable energy type.

### Background Art

Conventionally, a hydraulic transmission including a hydraulic pump and a hydraulic motor has been used. WO2012/164789A discloses a power generating apparatus of a renewable energy type using a hydraulic transmission configured to drive a plurality of hydraulic motors by a hydraulic pump.

The power generating apparatus of a renewable energy type described in Patent WO2012/164789A includes a plurality of synchronous generators each of which is connected to each of the hydraulic motors respectively and a synchronizer, wherein the synchronizer is configured to provide a motor control unit with a command value of a displacement of each of the hydraulic motors so as to synchronize the frequency and phase of the terminal voltage of each of the synchronous generators with a utility grid before connecting each of the synchronous generators to the utility grid.

US2006/0021813A1 is disclosing the preamble of claims 1 and 5.

### SUMMARY

### [Technical Problem]

With a hydraulic transmission including a plurality of hydraulic motors as described above, there is a problem of how to distribute the total displacement of the hydraulic motors to each of the hydraulic motors so as to achieve a favorable operation state of the hydraulic motors. In this regard, Patent Document 1 describes adjustment of the displacements of the hydraulic motors before connecting the generators which are driven by a hydraulic transmission to a utility grid, but does not sufficiently describe a specific disclosure of how to distribute the total displacement of the hydraulic motors during operation of the hydraulic motors after said connection.

An object of at least one embodiment of the present invention is to provide a hydraulic transmission, an operation method thereof and a power generating apparatus of a renewable energy type which are capable of a preferable distribution of the total displacement of a plurality of hydraulic motors to each of the plurality of hydraulic motors.

### [Solution to Problem]

(1) A hydraulic transmission according to some embodiments of the present invention comprises:
   a hydraulic pump configured to be driven by a mechanical energy which is inputted to a rotation shaft;
   a plurality of hydraulic motors each of which has a variable displacement and is configured to be driven by a pressurized oil from the hydraulic pump; and
   a controller for controlling a displacement of each of the hydraulic motors,
   wherein the controller includes:
   a total displacement determination unit for determining a total displacement Dₜₒₜₐₗ of the hydraulic motors;
   a displacement distribution unit configured to distribute the total displacement Dₜₒₜₐₗ to each of the hydraulic motors based on a motor information which indicates at least one of an inherent property or an operation state of each of the hydraulic motors and to determine the displacement of each of the hydraulic motors; and
   a command output unit which is configured to output a command for each of the hydraulic motors so as to achieve the displacement determined by the displacement distribution unit.

   According to the hydraulic transmission described in item (1), it is possible to preferably distribute the total displacement of the hydraulic motors to each hydraulic motor according to an operation guideline of the hydraulic motors (for instance, suppression of vibration, equalization of load, or countermeasure upon partial malfunction of the hydraulic motors) based on a motor information which indicates at least one of an inherent property or an operation state of each of the hydraulic motors.
(2) In some embodiments, in the hydraulic transmission according to item (1),
   the controller further includes an operation state information obtaining unit which is configured to obtain an operation state information which indicates an operation state of each of the hydraulic motors during operation of the hydraulic transmission, and the displacement distribution unit is configured to determine the displacement of each of the hydraulic motors based on at least the operation state information.
   According to the hydraulic transmission described in item (2), by determining the displacement of each of the hydraulic motors based on the operation state information of each hydraulic motor obtained by the operation state information obtaining unit with respect to each of the hydraulic motors, it is possible to determine the operation state of each hydraulic motor which may change during operation of the hydraulic transmission, and to reflect the operation state to distribution of the displacement.
(3) In some embodiments, in the hydraulic transmission according to item (2),
   the operation state information includes a vibration information which indicates a vibration of each of the hydraulic motors, and
   the displacement distribution unit is configured to determine the displacement of each of the hydraulic motors based on at least the vibration information so that an amplitude or a frequency of the vibration of each of the hydraulic motors is within a tolerable range.
   According to the hydraulic transmission described in item (3), by determining the displacement of each hydraulic motor based on the vibration information which indicates a vibration of each of the hydraulic motors (for instance, an information on the shaft vibration or torque change of each of the hydraulic motors), it is possible to determine the displacement so that an amplitude or a frequency of the vibration of each of the hydraulic motors is within a tolerable range. As a result, it is possible to keep the vibration of each of the hydraulic motors in a tolerable range.
(4) In some embodiments, in the hydraulic transmission according to item (2) or (3), the operation state information includes a variable displacement information which indicates a variable displacement range of each of the hydraulic motors, and
   the displacement distribution unit is configured to determine the displacement of each of the hydraulic motors based on at least the variable displacement information so that the displacement is within the variable displacement range.
   According to the hydraulic transmission described in item (4), even in the case where the variable displacement range of any one of the hydraulic motors is restricted (for instance, when a breakdown occurs in a cylinder of any one of the hydraulic motors and the displacement which can be distributed to the hydraulic motor is restricted), it is possible to distribute the optimum displacement where the variable displacement range is taken in account to each of the hydraulic motors.
   Herein, "a variable displacement information" may be set by an operator or estimated according to a breakdown detection result of the hydraulic motor measured by a breakdown detection sensor provided separately.
(5) In some embodiments, in the hydraulic transmission according to any of items (2) to (4),
   the operation state information includes an integration output information which indicates an integrated value of output of each of the hydraulic motors, and
   the displacement distribution unit is configured to determine the displacement of each of the hydraulic motors based on at least the integration output information so that a distribution ratio of the displacement of a first hydraulic motor of the hydraulic motors is higher than a second hydraulic motor which has a greater integrated value of output than the first hydraulic motor.
   According to the hydraulic transmission described in item (5), it is possible to equalize the integrated values of outputs of the first hydraulic motor and the second hydraulic motor, and thus to harmonize the maintenance times of the first hydraulic motor and the second hydraulic motor.
   Herein, "an integration output information" includes not only the integrated value of output of each of the hydraulic motors itself, but also the integrated value of output of each of the generators in the case where a plurality of generators is provided, each of the generators configured to be driven by each of the hydraulic motors.
(6) In some embodiments, in the hydraulic transmission according to any of items (2) to (5),
   the operation state information includes a power output information which indicates a power output of each of generators which are configured to be driven by each of the hydraulic motors respectively, and
   the displacement distribution unit is configured to determine the displacement of each of the hydraulic motors based on at least the power output information so that a total amount of the power output is maximized with respect to the total displacement Dₜₒₜₐₗ.
   Depending on how to distribute the total displacement Dₜₒₜₐₗ to each of the hydraulic motors, the total amount of the output of each generator which is driven by each of the hydraulic motors changes even at the same total displacement Dₜₒₜₐₗ. According to the hydraulic transmission described in item (6), by determining the displacement of each of the hydraulic motors taking the power output information into account, it is possible to determine the displacement of each of the hydraulic motors so that a total amount of the power output is maximized with respect to the total displacement Dₜₒₜₐₗ.
(7) In some embodiments, in the hydraulic transmission according to any of items (1) to (6),
   the motor information includes a prohibited displacement information which indicates a prohibited displacement as the inherent property of each of the hydraulic motors, and
   and the displacement distribution unit is configured to determine the displacement of each of the hydraulic motors based on at least the prohibited displacement information so as to avoid the prohibited displacement.
   According to the hydraulic transmission described in item (7), in the case where there is a certain displacement which is not preferable in operating the hydraulic motors, it is possible to operate the hydraulic motors avoiding the prohibited displacement.
(8) In some embodiments, in the hydraulic transmission according to item (7), the prohibited displacement defined by the prohibited displacement information excites a natural frequency of a rotational shaft of each of the hydraulic motors or a natural frequency of a structure around the hydraulic transmission.
   According to the hydraulic transmission described in item (8), it is possible to avoid excitation of a natural frequency of a rotational shaft of each of the hydraulic motors or of a structure around the hydraulic transmission caused by the displacement of the hydraulic motors, and thus to suppress vibration of a rotational shaft of each of the hydraulic motors or of a structure around the hydraulic transmission.
   Herein, "a natural frequency of a structure around the hydraulic transmission" includes, for instance in the case where the hydraulic transmission constitutes a drive train for transmitting a rotational energy of a rotor to a generator in a wind turbine generator, a natural frequency of a blade of the rotor or a natural frequency of a tower which supports a nacelle.
(9) In some embodiments, in the hydraulic transmission according to any of items (2) to (5), (7) or (8),
   the motor information includes an optimum displacement information as the inherent property of each of the hydraulic motors, the optimum displacement information indicating a combination of the displacements of the hydraulic motors which is capable of maximizing a total amount of power output of each of generators which are configured to be driven by each of the hydraulic motors respectively,
   and wherein the controller is configured to determine the displacement of each of the hydraulic motors based on at least the optimum displacement information.
   Depending on how to distribute the total displacement Dₜₒₜₐₗ to each of the hydraulic motors, the total amount of power output of each of the generators which is driven by each of the hydraulic motors respectively changes even at the same total displacement Dₜₒₜₐₗ. According to the hydraulic transmission described in item (9), in the case where there is given an optimum displacement information which indicates a combination of the displacements of the hydraulic motors which is capable of maximizing a total amount of power outputs of the generators, it is possible to maximize the total amount of the power outputs of the generators by determining the displacement of each of the hydraulic motors based on the optimum displacement information by the controller.
(10) In some embodiments, in the hydraulic transmission according to items (1) to (9),
   the hydraulic transmission further comprises a high pressure line provided between an outlet of the hydraulic pump and an inlet of each of the hydraulic motors,
   and the total displacement determination unit is configured to determine the total displacement Dₜₒₜₐₗ of the hydraulic motors based on a sum of:
   a first value which is defined according to a displacement of the hydraulic pump; and
   a second value which is defined according to a deviation of a pressure measurement value and a pressure target value of the high pressure line.

   According to the hydraulic transmission described in item (10), it is possible to bring the pressure of the high pressure line closer to a target value while achieving the output of the hydraulic motors which corresponds to the hydraulic pump.
(11) In some embodiments, in the hydraulic transmission according to item (10),
   the total displacement determination unit is configured to determine the displacement of the hydraulic pump in accordance with a correlation between a rotation speed of the rotation shaft of the hydraulic pump and a torque of the hydraulic pump, and to calculate the first value according to the displacement of the hydraulic pump.
   As for a relation between the rotation speed of the rotation shaft of the hydraulic pump and the torque of the hydraulic pump, an optimum relation is occasionally given depending on the intended use of the hydraulic transmission. For instance, in the hydraulic transmission used for a wind turbine generator, in order to maximize the power generation efficiency, it is possible to use a relation between the optimum rotation speed and torque corresponding to the wind speed as a given information and thus to determine the displacement of the hydraulic pump based on the information.
   According to the hydraulic transmission described in item (11), it is possible to calculate the first value for determining the total displacement of the hydraulic motors so that the total displacement of the hydraulic motors corresponds to the displacement of the hydraulic pump which achieves the appropriate torque corresponding to the rotation speed of the rotation shaft.
(12) In some embodiments, in the hydraulic transmission according to any of items (1) to (11), the displacement distribution unit is configured to distribute the total displacement Dₜₒₜₐₗ to the operating hydraulic motor only among the hydraulic motors based on a non-operating information which indicates a non-operating state of each of the hydraulic motors.
   According to the hydraulic transmission described in item (12), in the case where any one of the hydraulic motors is not operating, it is possible to distribute the total displacement Dₜₒₜₐₗ excluding the hydraulic motor which is not operating.
(13) A power generating apparatus of a renewable energy type according to some embodiments of the present invention comprises:
   at least one blade;
   a rotation shaft which is configured to be rotated by a renewable energy received by the at least one blade;
   a hydraulic pump configured to be driven by the rotation shaft;
   a plurality of hydraulic motors each of which has a variable displacement and is configured to be driven by a pressurized oil from the hydraulic pump;
   a plurality of generators each of which is configured to be driven by each of the hydraulic motors respectively; and
   a controller for controlling a displacement of each of the hydraulic motors,
   wherein the controller includes:
   a total displacement determination unit for determining a total displacement Dₜₒₜₐₗ of the hydraulic motors;
   a displacement distribution unit configured to distribute the total displacement Dₜₒₜₐₗ to each of the hydraulic motors based on a motor information which indicates at least one of an inherent property or an operation state of each of the hydraulic motors and to determine the displacement of each of the hydraulic motors; and
   a command output unit which is configured to output a command for each of the hydraulic motors so as to achieve the displacement determined by the displacement distribution unit.

   According to the power generating apparatus of a renewable energy type according to item (13), it is possible to preferably distribute the total displacement of the hydraulic motors to each hydraulic motor according to an operation guideline of the hydraulic motors (for instance, suppression of vibration, equalization of load, or countermeasure upon partial malfunction of the hydraulic motors) based on a motor information which indicates at least one of an inherent property or an operation state of each of the hydraulic motors. Also, it is possible to drive the generator by each of the hydraulic motors to which the total displacement is preferably distributed.
(14) An operating method of a hydraulic transmission according to some embodiments of the present invention is an operation method of a hydraulic transmission which includes: a hydraulic pump configured to be driven by a mechanical energy from the rotation shaft; and a plurality of hydraulic motors each of which has a variable displacement and configured to be driven by a pressurized oil from the hydraulic pump, and the method comprises:
   a total displacement determining step of determining a total displacement Dₜₒₜₐₗ of the hydraulic motors;
   a displacement distributing step of distributing the total displacement Dtotal to each of the hydraulic motors based on a motor information which indicates at least one of an inherent property or an operation state of each of the hydraulic motors and determining the displacement of each of the hydraulic motors; and
   a command output step of outputting a command for each of the hydraulic motors so as to achieve the displacement determined at the displacement distributing step.

   According to the method described in item (14), it is possible to preferably distribute the total displacement of the hydraulic motors to each hydraulic motor according to an operation guideline of the hydraulic motors (for instance, suppression of vibration, equalization of load, or countermeasure upon partial malfunction of the hydraulic motors) based on a motor information which indicates at least one of an inherent property or an operation state of each of the hydraulic motors.
(15) An operating method of a power generating apparatus of a renewable energy type according to some embodiments of the present invention is an operation method of a power generating apparatus of a renewable energy which includes: at least one blade; a rotation shaft configured to be rotated by a renewable energy received by the at least one blade; a hydraulic pump configured to be driven by the rotation shaft; a plurality of hydraulic motors each of which has a variable displacement type and is configured to be driven by a pressurized oil from the hydraulic pump; and a plurality of generators each of which is configured to be driven by each of the hydraulic motors respectively, and the method comprises:
   a total displacement determining step of determining a total displacement Dₜₒₜₐₗ of the hydraulic motors;
   a displacement distributing step of distributing the total displacement Dₜₒₜₐₗ to each of the hydraulic motors based on a motor information which indicates at least one of an inherent property or an operation state of each of the hydraulic motors and determining the displacement of each of the hydraulic motors; and
   a command output step of outputting a command for each of the hydraulic motors so as to achieve the displacement determined at the displacement distributing step.

According to the method described in item (15), it is possible to preferably distribute the total displacement of the hydraulic motors to each hydraulic motor according to an operation guideline of the hydraulic motors (for instance, suppression of vibration, equalization of load, or countermeasure upon partial malfunction of the hydraulic motors) based on a motor information which indicates at least one of an inherent property or an operation state of each of the hydraulic motors. Also, it is possible to drive the generator by each of the hydraulic motors to which the total displacement is preferably distributed.

According to at least one embodiment of the present invention, it is possible to provide a hydraulic transmission, an operation method thereof and a power generating apparatus of a renewable energy type which are capable of distributing the total displacement of a plurality of hydraulic motors to each of the hydraulic motors preferably.

### BRIEF DESCRIPTION OF DRAWINGS

[FIG.1] Fig. 1 is an illustration of an exemplary configuration of a wind turbine generator according to some embodiments.
[FIG. 2] Fig. 2 is an illustration of a detailed configuration of a controller according to some embodiments.
[FIG. 3] Fig. 3 is a schematic diagram of an operation state information obtaining unit and a displacement distribution unit according to some embodiments.
[FIG. 4] Fig. 4 is a schematic diagram of an operation state information obtaining unit and a displacement distribution unit according to some embodiments.
[FIG. 5] Fig. 5 is a schematic diagram of an operation state information obtaining unit and a displacement distribution unit according to some embodiments.
[FIG. 6] Fig. 6 is a schematic diagram of an operation state information obtaining unit and a displacement distribution unit according to some embodiments.
[FIG. 7] Fig. 7 is a schematic diagram of a memory unit and a displacement distribution unit according to some embodiments.
[FIG. 8] Fig. 8 is an illustration of a relationship between the total displacement Dₜₒₜₐₗ and the displacements D_{A}, D_{B} according to some embodiments.
[FIG. 9] Fig. 9 is an illustration of a calculation flow of the total displacement in a total displacement determination unit according to some embodiments.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

First, an overall configuration of a wind turbine generator as a power generating apparatus of a renewable energy type according to the embodiment will be described. However, the present invention can be applied to a power generating apparatus of other renewable energy types such as a tidal current generator, an ocean current generator, a river current generator and the like.

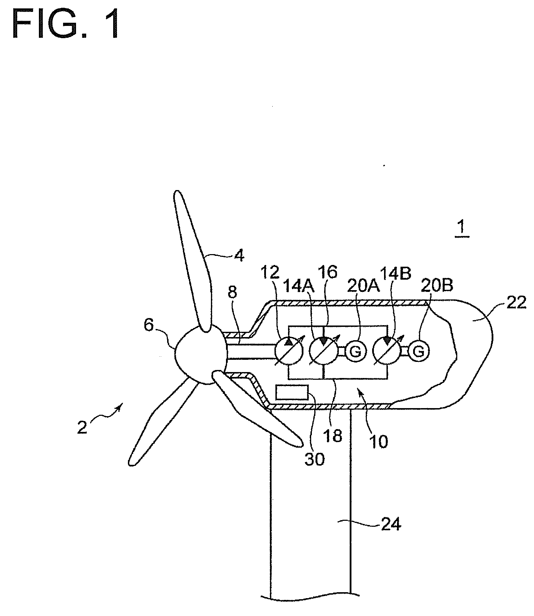

Fig. 1 is an illustration of an exemplary configuration of a wind turbine generator 1 according to some embodiment.

As shown in Fig. 1, the wind turbine generator 1 mainly includes a rotor 2 which rotates upon receiving wind, a hydraulic transmission 10 which increases the rotation speed of the rotor 2, a plurality of generators 20A, 20B which generate electrical power, a nacelle 22, and a tower 24 which supports the nacelle 22.

The rotor 2 has a configuration where a rotation shaft 8 is connected to a hub 6 to which at least one blade 4 is attached. In the embodiment shown in Fig. 1, three blades 4 extend radially around the hub 6, where each blade 4 is attached to the hub 6 which is connected to the rotation shaft 8. The entire rotor 2 including the rotation shaft 8 is rotated by the wind energy (renewable energy) received at the blades 4, and then the rotation energy is inputted to a hydraulic transmission 10 via the rotation shaft 8.

The hydraulic transmission 10 includes a hydraulic pump 12 of a variable displacement type configured to be driven by the mechanical energy inputted to the rotation shaft 8, a plurality of hydraulic motors 14A, 14B each of which has a variable displacement and is configured to be driven by a pressurized oil from the hydraulic pump 12, a high pressure line 16 (high pressure oil path) and a low pressure line 18 (low pressure oil path) provided between the hydraulic pump 12 and the hydraulic motors 14, and a controller 30 for controlling the displacement of each of the hydraulic motors.

Herein, as the hydraulic motors 14A, 14B in the hydraulic transmission 10, a generally known hydraulic motor of a variable displacement type can be used. Also, one example of the control for changing the displacement of each of the hydraulic motors 14A, 14B of a variable displacement type is, in a hydraulic motor which is configured to rotate a cam using a plurality of pistons and cylinders surrounding a hydraulic chamber, a control which changes a number of hydraulic chambers in an operating state (a state contributing to driving the hydraulic motors) and a number of hydraulic chambers in a non-operating state (a state not contributing to driving the hydraulic motors).

The hydraulic motors 14A, 14B are arranged parallel to each other and are connected to a high pressure line 16 and a low pressure line 18. That is, the high pressure line 16 which has one end connected to the outlet of the hydraulic pump 12 branches halfway and connects to the inlets of the hydraulic motors 14A, 14B at the branched end, and the low pressure line 18 which has one branched end connected to outlets of the hydraulic motors 14A, 14B merges into one line halfway and is connected to an inlet of the hydraulic pump 12 at the merged end. The operating oil discharged from the hydraulic pump 12 (high pressure oil) flows into the hydraulic motors 14A, 14B via the high pressure line 16 and thereby drives the hydraulic motors 14A, 14B. The working oil having performed work in the hydraulic motors 14A, 14B (low pressure oil) flows into the hydraulic pump 12 via the low pressure line 18, becomes pressurized in the hydraulic pump 12, and then flows again into the hydraulic motors 14A, 14B via the high pressure line 16.

While Fig. 1 illustrates a hydraulic transmission 10 which includes two hydraulic motors 14, three or more hydraulic motors 14 may be provided, each of the hydraulic motors 14 being connected to the hydraulic motor 12.

Each of the plurality of generators 20A, 20B is configured to be driven by each of the hydraulic motors 14A, 14B respectively, and is connected to a utility grid (not shown), thus being capable of supplying the generated power to the utility grid.

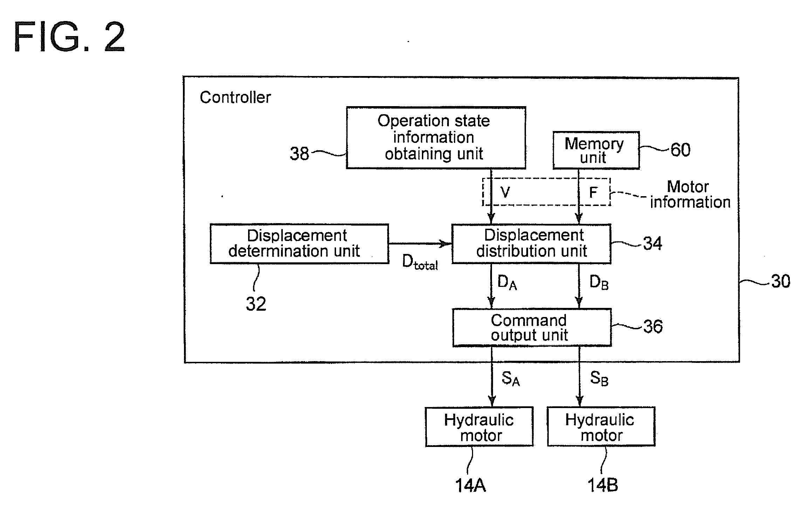

Fig. 2 is an illustration of a detailed configuration of a controller 30 according to some embodiment. As shown in the drawing, the controller 30 includes: a total displacement determination unit 32 for determining a total displacement Dₜₒₜₐₗ of each of the hydraulic motors 14A, 14B and; a displacement distribution unit 34 configured to distribute the total displacement Dₜₒₜₐₗ to each of the hydraulic motors 14A, 14B based on a motor information which indicates at least one of an inherent property or operation state of each of the hydraulic motors 14A, 14B and to determine the displacement D_{A}, D_{B} of each of the hydraulic motors 14A, 14B; and a command output unit 36 which is configured to output a command S_{A}, S_{B} for each of the hydraulic motors 14A, 14B so as to achieve the displacement D_{A}, D_{B} determined by the displacement distribution unit 34.

As a result, it is possible to preferably distribute the total displacement Dₜₒₜₐₗ of the hydraulic motors 14A, 14B to each of the hydraulic motors 14A, 14B according to an operation guideline of the hydraulic motors 14A, 14B (for instance, suppression of vibration, equalization of load, or countermeasure upon partial malfunction of the hydraulic motors 14A, 14B) based on a motor information which indicates at least one of an inherent property or an operation state of each of the hydraulic motors 14A, 14B.

The controller 30 illustrated in Fig. 2 includes an operation state information obtaining unit 38 which is configured to obtain an operation state information V which indicates the operation state of each of the hydraulic motors 14A, 14B as a motor information while the hydraulic transmission 10 is operated, and the displacement distribution unit 34 is configured to determine the displacement D_{A}, D_{B} of each of the hydraulic motors 14A, 14B based on the operation state information V.

In the above case, by determining the displacement D_{A}, D_{B} of each of the hydraulic motors 14A, 14B based on the operation state information V obtained by the operation state information obtaining unit 38, it is possible to determine the operation state of the hydraulic motors 14A, 14B which may change while the hydraulic transmission 10 is operated, and to reflect the operation state to distribution of the total displacement Dₜₒₜₐₗ.

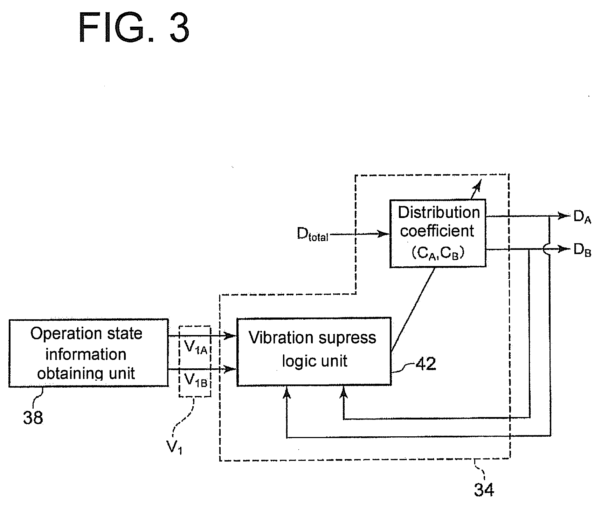

Fig. 3 is a schematic diagram of an operation state information obtaining unit 38 and a displacement distribution unit 34 according to some embodiment. The operation information obtaining unit 38 is configured to obtain a vibration information V₁ which indicates vibration V_{1A}, V_{1B} of each of the hydraulic motors 14A, 14B (for instance, an information on the shaft vibration or torque change of each of the hydraulic motors 14A, 14B) as an operation state information V. The displacement distribution unit 34 determines the displacement D_{A} of the hydraulic motor 14A by multiplying the total displacement Dₜₒₜₐₗ by distribution coefficient C_{A}, and determines the displacement D_{B} of the hydraulic motor 14B by multiplying the total displacement Dₜₒₜₐₗ by distribution coefficient C_{B}. Also, the vibration suppress logic unit 42 included in the displacement distribution unit 34 monitors the displacements D_{A}, D_{B} and the vibration information V₁ obtained by the operation state information obtaining unit 38 while changing the distribution coefficients C_{A}, C_{B}, in a certain range, and, when either of vibrations V_{1A}, V_{1B} indicated by the vibration information V₁ exceeds a tolerable level, adjusts the coefficients C_{A}, C_{B} so as to thereafter avoid the displacements D_{A}, D_{B} at the time. That is, the displacement distribution unit 34 determines the displacement D_{A}, D_{B} of each of the hydraulic motors 14A, 14B so that an amplitude or frequency of the vibration of each of the hydraulic motors 14A, 14B is within a tolerable range. As a result, it is possible to suppress breakage of the bearing and the like of each of the hydraulic motors 14A, 14B or breakage of other surrounding machines.

In the case where a vibration information of the shaft vibration and the like of each of the hydraulic motors 14A, 14B is obtained as a vibration information V₁, a known vibration censor can be used, such as a vibration sensor of a capacitance type, an eddy current type, and a piezoelectric element type. Also, in the case where a torque variation information of each of the hydraulic motors 14A, 14B is obtained as a vibration information V₁, a known torque sensor can be used, such as a contact-free torque sensor which detects torque without contact by utilizing the magnetostriction effect and a contact torque sensor in which a slip ring is adopted.

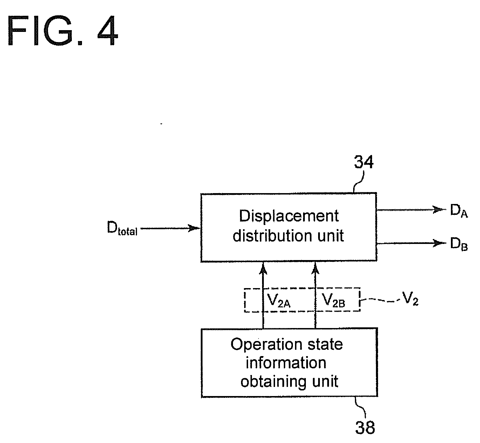

Fig. 4 is a schematic diagram of an operation state information obtaining unit 38 and a displacement distribution unit 34 according to some embodiment. The operation state information obtaining unit 38 shown in Fig. 4 is configured to obtain a variable displacement information V₂ which indicates a variable displacement range V_{2A}, V_{2B} of the displacement of each of the hydraulic motors 14A, 14B as an operation state information V. The displacement distribution unit 34 determines the displacements D_{A}, D_{B} of the hydraulic motors 14A, 14B based on the variable displacement information V₂ obtained by the operation state information obtaining unit 38 so that the displacements D_{A}, D_{B} are within the variable displacement range.

As a result, even in the case where any one of the variable displacement ranges V_{2A}, V_{2B} of the displacements D_{A}, D_{B} of the hydraulic motors 14A, 14B is restricted (for instance, when a breakdown occurs in a cylinder which forms a hydraulic chamber of the hydraulic motor 14A and the displacement which can be distributed to the hydraulic motor 14A is restricted), it is possible to distribute the appropriate displacement where the variable displacement range is taken in account to each of the hydraulic motors 14A, 14B.

Herein, "a variable displacement information V₂" may be set by an operator or estimated according to a breakdown detection result of the hydraulic motor measured by a breakdown detection sensor provided separately. Also, "a variable displacement information V₂" may be a non-operating information which indicates a state where each of the hydraulic motors 14A, 14b is not operated. In this case, the displacement distribution unit 34 can determine such displacements D_{A}, D_{B} that fall within the variable displacement range by distributing the total displacement Dₜₒₜₐₗ only to the operating hydraulic motor among the hydraulic motors 14A, 14B.

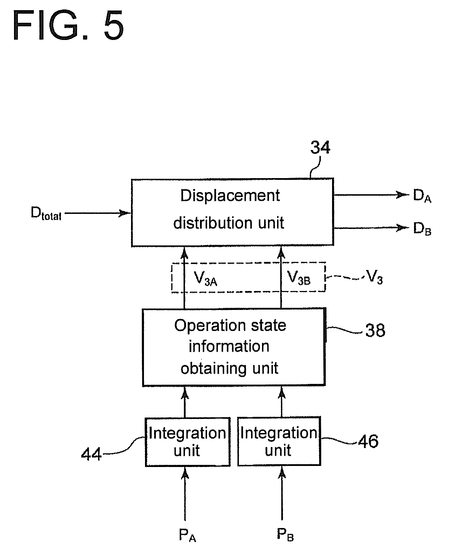

Fig. 5 is a schematic diagram of an operation state information obtaining unit 38 and a displacement distribution unit 34 according to some embodiment. The operation state information obtaining unit 38 shown in Fig. 5 obtains an integration output information V₃ as an operation state information, the integration output information V₃ indicating an integrated value V_{3A}, V_{3B} of the output P_{A}, P_{B} of each of the hydraulic motors 14A, 14B integrated by each of the integration units 44, 46 respectively, where the integrated value V_{3A} is an integrated value of the output P_{A}, and the integrated value V_{3B} is an integrated value of the output P_{B}. The displacement distribution unit 34 is configured to determine the displacement of each of the hydraulic motors 14A, 14B based on at least the integration output information V₃ so that a distribution ratio of the displacement of a first hydraulic motor of the hydraulic motors 14A, 14B is higher than a second hydraulic motor which has a greater integrated value of output than the first hydraulic motor. For instance, in the integration output information V₃ obtained by the operation state information obtaining unit 38, in the case where the integrated value V_{3B} is greater than the integrated value V_{3A}, the displacement distribution unit 34 determines the displacement D_{A}, D_{B} of each of the hydraulic motors 14A, 14B so that a distribution ratio D_{A}/Dₜₒₜₐₗ of the displacement of the hydraulic motor 14A is higher than D_{B}/ Dₜₒₜₐₗ.

According to the embodiment illustrated in Fig. 5, it is possible to equalize the integrated value V_{3A} of the output P_{A} of the hydraulic motor 14A and the integrated value B_{3B} of the output P_{B} of the hydraulic motor 14B, and thus to harmonize the maintenance times of the hydraulic motor 14A and the hydraulic motor 14B.

Herein, the value indicated by the integration output information V₃ may be not only the integrated value of the output of each of the hydraulic motors 14A, 14B itself, but also a value which indirectly indicates the integrated value of the output of each of the hydraulic motors 14A, 14B, such as the integrated value of the output of each of the generators 20A, 20B.

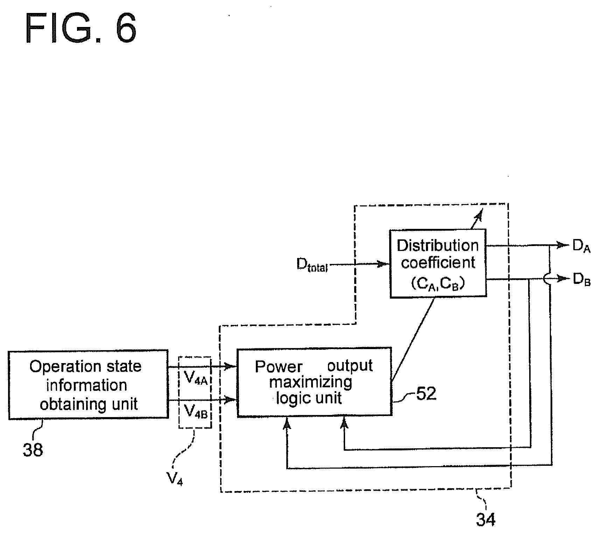

Fig. 6 is a schematic diagram of an operation state information obtaining unit 38 and a displacement distribution unit 34 according to some embodiment. The operation state information obtaining unit 38 shown in Fig. 6 is configured to obtain a power output information V₄ which indicates a power output V_{4A}, V_{4B} of each of generators 20A, 20B. The displacement distribution unit 34 determines the displacement D_{A} of the hydraulic motor 14A by multiplying the total displacement Dₜₒₜₐₗ by distribution coefficient C_{A}, and determines the displacement D_{B} by multiplying the total displacement Dₜₒₜₐₗ by distribution coefficient C_{B}.

Also, the power output maximizing logic unit 52 included in the displacement distribution unit 34 adjusts the distribution coefficients C_{A}, C_{B} based on the power output information V₄ obtained by the operation state information obtaining unit 38 and the displacements D_{A}, D_{B} as actual measurement values so that a total amount of the power outputs V_{4A}, V_{4B} (that is, a sum of V_{4A} and V_{4B}) is maximized with respect to the total displacement Dₜₒₜₐₗ. For instance, the power output maximizing logic unit 52 monitors the displacements D_{A}, D_{B} as actual measurement values and the power output information V₄ while changing the distribution coefficients C_{A}, C_{B}, in a certain range, and determines the distribution coefficients C_{A}, C_{B} which maximize the total amount of the power outputs V_{4A}, V_{4B}.

Depending on how to distribute the total displacement Dₜₒₜₐₗ to each of the hydraulic motors 14A, 14B, the total amount of the power outputs V_{4A}, V_{4B} of each of the generators 20A, 20B which is driven by each of the hydraulic motors 14A, 14B (that is, a sum of V_{4A}, and V_{4B}) respectively changes even at the same total displacement Dₜₒₜₐₗ. According to the embodiment shown in Fig. 6, as the displacements D_{A}, D_{B} are determined based on at least the power output information V₄ so that the total amount of the power outputs V_{4A}, V_{4B} is maximized with respect to the total displacement Dₜₒₜₐₗ, it is possible to efficiently perform power generation as an entire wind turbine generator 1 which includes the generators 20A, 20B.

Herein, in the case where such coefficients C_{A}, C_{B} that maximize the total amount of power outputs V_{4A}, V_{4B} with respect to the total displacement Dₜₒₜₐₗ is known, the coefficients C_{A}, C_{B} may be set based on a predetermined table or correlation (a table or correlation which defines a relation between the total displacement Dₜₒₜₐₗ and the coefficients C_{A}, C_{B}).

As shown in Fig. 2, the controller 30 according to some embodiment includes a memory unit 60 which stores an information F as a motor information, the information F indicating an inherent property of each of the hydraulic motors 14A, 14B.

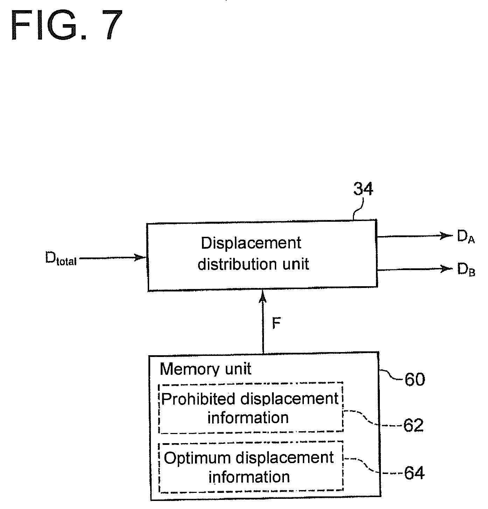

Fig. 7 is a schematic diagram of a memory unit 60 and a displacement distribution unit 34 according to some embodiment. In the memory unit 60 illustrated in Fig. 7, as an information F which indicates an inherent property of each of the hydraulic motors 14A, 14B, a prohibited displacement information 62 which indicates a prohibited displacement D₁ is stored.

The displacement distributing unit 34 is configured to determine the displacement D_{A}, D_{B} of each of the hydraulic motors 14A, 14B based on the prohibited displacement information 62 stored in the memory unit 60 so as to avoid the prohibited displacement D₁.

According to the embodiment illustrated in Fig. 7, it is possible to operate the hydraulic motors 14A, 14B avoiding the prohibited displacement D₁ which is not preferable in operating the hydraulic motors 14A, 14B. Herein, the prohibited displacement may vary by each of the hydraulic motors.

In some embodiment, the prohibited displacement D₁ defined by the prohibited displacement information 62 stored in the memory unit 60 in Fig. 7 is a displacement which excites a natural frequency of a rotational shaft of each of the hydraulic motors 14A, 14B or a natural frequency of a structure around the hydraulic transmission 10. In this case, it is possible to avoid excitation of a natural frequency of a rotational shaft of each of the hydraulic motors 14A, 14B or of a structure around the hydraulic transmission 10 caused by the displacements D_{A}, D_{B} of the hydraulic motors 14A, 14B, and thus to suppress the vibration of a rotational shaft of each of the hydraulic motors 14A, 14B or of a structure around the hydraulic transmission 10.

Herein, "a natural frequency of a structure around the hydraulic transmission" in the wind turbine generator 1 is, for instance, a natural frequency of the blade 4 or a natural frequency of the tower 2 which supports the nacelle 22 as described above.

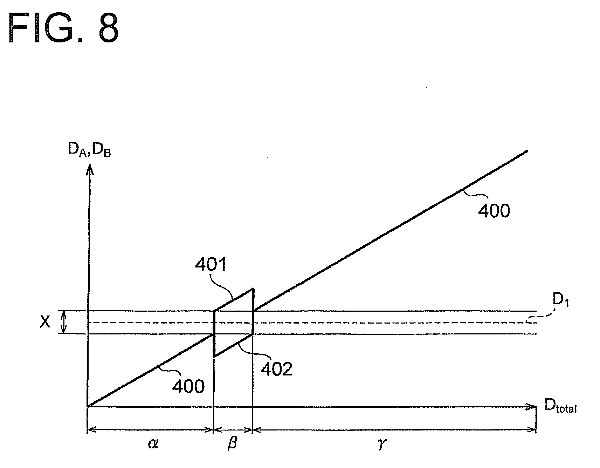

Fig. 8 is an illustration of a relationship between the total displacement Dₜₒₜₐₗ and the displacement D_{A}, D_{B} according the embodiment illustrated in Fig. 7.

In the distribution method illustrated in Fig. 8, the displacements D_{A}, D_{B} are determined so as to avoid the prohibited displacement D₁. As shown in the drawing, while the total displacement Dₜₒₜₐₗ is within the range α, the total displacement Dₜₒₜₐₗ is distributed equally to D_{A}, D_{B} which are defined by the straight line 400 (that is, a relation which satisfies D_{A}= Dₜₒₜₐₗ × 1/2, D_{B} = Dₜₒₜₐₗ × 1/2).

While the total displacement Dₜₒₜₐₗ is within the range 6, distributing the displacement total Dₜₒₜₐₗ equally to D_{A}, D_{B} causes D_{A}, D_{B} to fall within the prohibited range X which includes the prohibited displacement D₁. Thus, D_{A} is set to be a greater value than the prohibited range X and D_{B} is set to be a less value than the prohibited range X. For instance, D_{A} is defined by the straight line 401 (D_{A}= Dₜₒₜₐₗ × 1/2 + C) and D_{B} is defined by the straight line 402 (D_{B} = Dₜₒₜₐₗ × 1/2 - C). Herein, C in the above equations is a greater value than the width of the prohibited range X.

While the displacement total Dₜₒₜₐₗ is within the range γ, the total displacement Dₜₒₜₐₗ is distributed equally to D_{A}, D_{B} which are defined by the straight line 400 (that is, a relation which satisfies D_{A} = Dₜₒₜₐₗ × 1/2, D_{B} = Dₜₒₜₐₗ × 1/2).

According to the distribution method of the total displacement Dₜₒₜₐₗ shown in Fig. 8, it is possible to determine the displacements D_{A}, D_{B} so as to avoid the prohibited displacement D₁ and to achieve the desired total displacement Dₜₒₜₐₗ. When the total displacement Dₜₒₜₐₗ changes over the boundary between region α and region β or the boundary between region β and region γ, the displacements D_{A}, D_{B} change over different lines. However, at this time, the value of the displacement D_{A}, D_{B} does not need to jump but may change promptly and continuously between the different lines.

Also, when the total displacement Dₜₒₜₐₗ has changed over the boundary between region α and region β or the boundary between region β and region γ, the change in the displacement of the hydraulic pump may be coped with so that the total displacement Dₜₒₜₐₗ does not change frequently over the boundary by fixing the total displacement Dₜₒₜₐₗ and changing the pressure in the high pressure line until a predetermined time passes after the change over the boundary. Also, the change in the displacement of the hydraulic pump may be coped with by fixing one of D_{A}, D_{B} and changing the other so as to increase or decrease the difference between D_{A} and D_{B} until a certain time passes after the average of D_{A}, D_{B} has gone out of the prohibited range X.

Herein, the displacement D₁ or the prohibited range X is illustrated as an example of the prohibited displacement information corresponding to a natural frequency of the hydraulic motor described in Fig. 7.

Further, in the memory unit 60 illustrated in Fig. 7, stored is an optimum displacement information 64 which indicates a combination of the displacements of the hydraulic motors 14A, 14B which is capable of maximizing a total amount of power outputs V_{4A}, V_{4B} of the generators 20A, 20B (that is ,a sum of V_{4A}, and V_{4B}), where the optimum displacement information 64 is a correlation or table for deriving a combination of displacements of the hydraulic motors 14A, 14B from the total displacement Dₜₒₜₐₗ, the combination being optimum for maximizing the total amount of the power outputs V_{4A}, V_{4B}. The displacement distribution unit 34 is configured to determine the displacement D_{A}, D_{B} of each of the hydraulic motors 14A, 14B based on the optimum displacement information 64 stored in the memory unit 60.

Depending on how to distribute the total displacement Dₜₒₜₐₗ to each of the hydraulic motors 14A, 14B, the total amount of power outputs V_{4A}, V_{4B} of the generators 20A, 20B changes even at the same total displacement Dₜₒₜₐₗ. In this regard, according to the embodiment illustrated in Fig. 7, by determining the displacement of each of the hydraulic motors 14A, 14B by the displacement distribution unit 34 based on the given optimum displacement information 64 which indicates a combination of the displacements of the hydraulic motors 14A, 14B which is capable of maximizing a total amount of power outputs V_{4A}, V_{4B} of the generators 20A, 20B, it is possible to easily maximize the total amount of the power outputs V_{4A}, V_{4B} of the generators 20A, 20B.

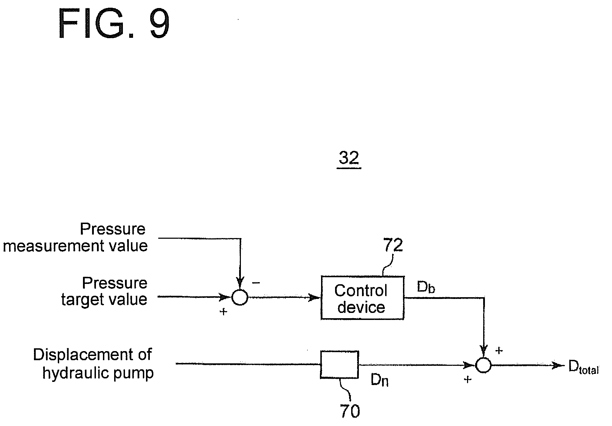

Fig. 9 is an illustration of a calculation flow of the total displacement Dₜₒₜₐₗ in a total displacement determination unit 32 according to some embodiment. The total displacement determination unit 32 shown in Fig. 9 is configured to determine the total displacement Dₜₒₜₐₗ of the displacements of the hydraulic motors based on a sum of: a first value Dₙ which is defined according to a displacement of the hydraulic pump 12; and a second value D_{b} which is defined according to a deviation of a pressure measurement value and a pressure target value of the high pressure line 16. In Fig. 9, the adjustor 70 is configured to calculate the fist value Dₙ which corresponds to the displacement of the hydraulic pump 12 and the control device 72 is configured to calculate the second value D_{b} so as to bring the pressure of the high pressure line 16 close to the pressure target value. For instance, when the pressure measurement value of the high pressure line 16 is less than the pressure target value of the high pressure line 16, the control device 72 outputs the second value D_{b} as a negative value, and when the pressure measurement value of the high pressure line 16 is greater than the pressure target value of the high pressure line 16, the control device 72 outputs the second value D_{b} as a positive value.

According to the hydraulic transmission 10 which includes the total displacement determination unit 32 shown in Fig. 9, it is possible to bring the pressure of the high pressure line 16 closer to the pressure target value while achieving the total amount of the outputs of the hydraulic motors 14A, 14B which corresponds to the output of the hydraulic pump 12.

The displacement of the hydraulic pump 12 in Fig. 9 may be determined by the total displacement determination unit 32 in accordance with a correlative relationship (a table or correlation) between a rotation speed of the rotation shaft 8 of the hydraulic pump 12 and a torque of the hydraulic pump 12.

There is a case where an optimum relationship between a rotation speed of the rotation shaft 8 of the hydraulic pump 12 and a torque of the hydraulic pump 12 is given depending on the intended use of the hydraulic transmission 10. For instance, in the hydraulic transmission 10 used for the wind turbine generator 1, in order to maximize the power generation efficiency, a relation between the optimum rotation speed and toque corresponding to the wind speed can be used as a given information and thus the displacement of the hydraulic pump 12 can be determined based on the information.

Accordingly, by determining the displacement of the hydraulic pump 12 in accordance with the above correlation, it is possible to calculate the first value Dₙ for determining the total displacement Dₜₒₜₐₗ of the hydraulic motors 14A, 14B so that the total displacement Dₜₒₜₐₗ corresponds to the displacement of the hydraulic pump 12 which achieves the appropriate torque corresponding to the rotation speed of the rotation shaft. 8.

As described above, according to the hydraulic transmission 10, it is possible to preferably distribute the total displacement of the hydraulic motors 14A, 14B to each of the hydraulic motors 14A, 14B according to an operation guideline of the hydraulic motors 14A, 14B (for instance, suppression of vibration, equalization of load, or countermeasure upon partial malfunction of the hydraulic motors 14A, 14B) based on a motor information which indicates at least one of an inherent property or an operation state of each of the hydraulic motors 14A, 14B.

### [Reference Signs list]

- 1: Wind turbine generator
- 2: Rotor
- 4: Blade
- 6: Hub
- 8: Rotation shaft
- 10: Hydraulic transmission
- 12: Hydraulic pump
- 14A, 14B: Hydraulic motor
- 16: High pressure line
- 18: Low pressure line
- 20A, 20B: Generator
- 22: Nacelle
- 24: Tower
- 30: Controller
- 32: Total displacement determination unit
- 34: Displacement distribution unit
- 36: Command output unit
- 38: Operation state information obtaining unit
- 42: Vibration suppress logic unit
- 44, 46: Integration unit
- 48: Integration information output unit
- 52: Power output maximizing logic unit
- 60: Memory unit
- 62: Prohibited displacement information
- 64: Optimum displacement information
- 71: Adjustor
- 72: Controlling device

## Claims

1. A hydraulic transmission (10) comprising:
a hydraulic pump (12) configured to be driven by a mechanical energy which is inputted to a rotation shaft (8);
a plurality of hydraulic motors (14A,14B) each of which has a variable displacement and is configured to be driven by a pressurized oil from the hydraulic pump (12); and
a controller (30) for controlling a displacement of each of the hydraulic motors (14A,14B),
wherein the controller (30) includes:
a total displacement determination unit (32) for determining a total displacement Dₜₒₜₐₗ of the hydraulic motors (14A,14B);
a displacement distribution unit (34) configured to distribute the total displacement Dₜₒₜₐₗ to each of the hydraulic motors (14A,14B) based on a motor information which indicates at least one of an inherent property or an operation state of each of the hydraulic motors (14A,14B) and to determine the displacement of each of the hydraulic motors (14A,14B);
a command output unit (36) which is configured to output a command for each of the hydraulic motors (14A,14B) so as to achieve the displacement determined by the displacement distributing unit (34);
**characterized in that** the controller (30) includes an operation state information obtaining unit (38) which is configured to obtain an operation state information including a vibration information, said operation state information indicating the operation state of each of the hydraulic motors (14A,14B) while the hydraulic transmission (10) is operated,
the operation state information includes a vibration information which indicates a vibration of each of the hydraulic motors (14A,14B), and
the displacement distribution unit (34) is configured to determine the displacement of each of the hydraulic motors (14A,14B) based on at least the vibration information so that an amplitude or a frequency of the vibration of each of the hydraulic motors (14A,14B) is within an tolerable range.

2. The hydraulic transmission (10) according to claim 1,
wherein the operation state information includes a variable displacement information which indicates a variable displacement range of each of the hydraulic motors (14A,14B), and
wherein the displacement distribution unit (34) is configured to determine the displacement of each of the hydraulic motors (14A,14B) based on at least the variable displacement information so that the displacement is within the variable displacement range.

3. The hydraulic transmission (10) according to claim 1 or 2,
wherein the operation state information includes an integration output information which indicates an integrated value of output of each of the hydraulic motors, and
wherein the displacement distribution unit (34) is configured to determine the displacement of each of the hydraulic motors (14A,14B) based on at least the integration output information so that a distribution ratio of the displacement of a first hydraulic motor of the hydraulic motors (14A,14B) is higher than a second hydraulic motor which has a greater integrated value of output than the first hydraulic motor.

4. The hydraulic transmission (10) according to any of claims 1 to 3,
wherein the operation state information includes a power output information which indicates a power output of each of generators (20A,20B) which are configured to be driven by each of the hydraulic motors (14A,14B) respectively, and
wherein the displacement distribution unit (34) is configured to determine the displacement of each of the hydraulic motors (14A,14B) based on at least the power output information so that a total amount of the power output is maximized with respect to the total displacement Dₜₒₜₐₗ.

5. A hydraulic transmission (10) comprising:
a hydraulic pump (12) configured to be driven by a mechanical energy which is inputted to a rotation shaft (8);
a plurality of hydraulic motors (14A,14B) each of which has a variable displacement and is configured to be driven by a pressurized oil from the hydraulic pump (12); and
a controller (30) for controlling a displacement of each of the hydraulic motors (14A,14B),
wherein the controller (30) includes:
a total displacement determination unit (32) for determining a total displacement Dₜₒₜₐₗ of the hydraulic motors (14A,14B);
a displacement distribution unit (34) configured to distribute the total displacement Dₜₒₜₐₗ to each of the hydraulic motors (14A,14B) based on a motor information which indicates at least one of an inherent property or an operation state of each of the hydraulic motors (14A,14B) and to determine the displacement of each of the hydraulic motors (14A,14B);
a command output unit (36) which is configured to output a command for each of the hydraulic motors (14A,14B) so as to achieve the displacement determined by the displacement distributing unit (34);
**characterized in that** the motor information includes a prohibited displacement information which indicates a prohibited displacement as the inherent property of each of the hydraulic motors (14A,14B),
the displacement distribution unit (34) is configured to determine the displacement of each of the hydraulic motors (14A,14B) based on at least the prohibited displacement information so as to avoid the prohibited displacement; and
the prohibited displacement defined by the prohibited displacement information excites a natural frequency of a rotational shaft of each of the hydraulic motors (14A,14B) or a natural frequency of a structure around the hydraulic transmission.

6. The hydraulic transmission (10) according to any of claims 1 to 3, and 5, wherein the motor information includes an optimum displacement information as the inherent property of each of the hydraulic motors (14A,14B), the optimum displacement information indicating a combination of the displacements of the hydraulic motors (14A,14B) which enables maximizing a total amount of power output of each of generators (20A,20B) which are configured to be driven by each of the hydraulic motors (14A,14B) respectively,
and wherein the displacement distribution unit (34) is configured to determine the displacement of each of the hydraulic motors (14A,14B) based on at least the optimum displacement information.

7. The hydraulic transmission (10) according to any of claims 1 to 6, further comprising a high pressure line (16) provided between an outlet of the hydraulic pump (12) and an inlet of each of the hydraulic motors (14A,14B),
wherein the total displacement determination unit (32) is configured to determine the total displacement Dₜₒₜₐₗ of the hydraulic motors (14A,14B) based on a sum of:
a first value which is defined according to a displacement of the hydraulic pump (12); and
a second value which is defined according to a deviation of a pressure measurement value and a pressure target value of the high pressure line (16).

8. The hydraulic transmission (10) according to claim 7, wherein the total displacement determination unit (32) is configured to determine the displacement of the hydraulic pump (12) in accordance with a correlation between a rotation speed of the rotation shaft (8) and a torque of the hydraulic pump (12), and to calculate the first value according to the displacement of the hydraulic pump (12).

9. The hydraulic transmission (10) according to any of claims 1 to 8, wherein the displacement distribution unit (34) is configured to distribute the total displacement Dₜₒₜₐₗ to operating hydraulic motors (14A,14B) only among the hydraulic motors based on a non-operating information which indicates a non-operating state of each of the hydraulic motors (14A,14B).

10. A power generating apparatus of a renewable energy type comprising:
at least one blade (4);
a rotation shaft (8) which is configured to be rotated by a renewable energy received by the at least one blade (4); and
the hydraulic transmission (10) according to any of claims 1 to 9.

## Patentansprüche

1. Hydraulisches Getriebe (10), umfassend:
eine Hydraulikpumpe (12), die dafür konfiguriert ist, durch eine mechanische Energie angetrieben zu werden, die in eine Drehwelle (8) eingespeist wird,
mehrere Hydraulikmotoren (14A, 14B), die jeweils eine verstellbare Verdrängung haben und dafür konfiguriert sind, durch ein druckbeaufschlagtes Öl von der Hydraulikpumpe (12) angetrieben zu werden, und
eine Steuereinheit (30) zum Steuern einer Verdrängung eines jeden der Hydraulikmotoren (14A, 14B),
wobei die Steuereinheit (30) enthält:
eine Gesamtverdrängungsbestimmungseinheit (32) zum Bestimmen einer Gesamtverdrängung Dₜₒₜₐₗ der Hydraulikmotoren (14A, 14B),
eine Verdrängungsverteilungseinheit (34), die dafür konfiguriert ist, die Gesamtverdrängung Dₜₒₜₐₗ zu jedem der Hydraulikmotoren (14A, 14B) auf der Basis einer Motorinformation zu verteilen, die eine inhärente Eigenschaft und/oder einen Betriebszustand eines jeden der Hydraulikmotoren (14A, 14B) angibt, und die Verdrängung eines jeden der Hydraulikmotoren (14A, 14B) zu bestimmen,
eine Befehlsausgabeeinheit (36), die dafür konfiguriert ist, einen Befehl für jeden der Hydraulikmotoren (14A, 14B) auszugeben, um die durch die Verdrängungsverteilungseinheit (34) bestimmte Verdrängung zu realisieren,
**dadurch gekennzeichnet, dass** die Steuereinheit (30) eine Betriebszustandsinformationserhaltseinheit (38) enthält, die dafür konfiguriert ist, eine Betriebszustandsinformation zu erhalten, die eine Vibrationsinformation enthält, wobei die Betriebszustandsinformation den Betriebszustand eines jeden der Hydraulikmotoren (14A, 14B), während das hydraulische Getriebe (10) betrieben wird, angibt,
die Betriebszustandsinformation eine Vibrationsinformation enthält, die eine Vibration eines jeden der Hydraulikmotoren (14A, 14B) angibt, und
die Verdrängungsverteilungseinheit (34) dafür konfiguriert ist, die Verdrängung eines jeden der Hydraulikmotoren (14A, 14B) auf der Basis mindestens der Vibrationsinformation so zu bestimmen, dass eine Amplitude oder eine Frequenz der Vibration eines jeden der Hydraulikmotoren (14A, 14B) innerhalb eines tolerierbaren Bereichs liegt.

2. Hydraulisches Getriebe (10) nach Anspruch 1,
wobei die Betriebszustandsinformation eine Information über eine variable Verdrängung enthält, die einen Bereich einer variablen Verdrängung eines jeden der Hydraulikmotoren (14A, 14B) angibt, und
wobei die Verdrängungsverteilungseinheit (34) dafür konfiguriert ist, die Verdrängung eines jeden der Hydraulikmotoren (14A, 14B) auf der Basis mindestens der Information über eine variable Verdrängung so zu bestimmen, dass die Verdrängung innerhalb des Bereichs einer variablen Verdrängung liegt.

3. Hydraulisches Getriebe (10) nach Anspruch 1 oder 2,
wobei die Betriebszustandsinformation eine Integrationsausgabeinformation enthält, die einen integrierten Ausgabewert eines jeden der Hydraulikmotoren angibt, und
wobei die Verdrängungsverteilungseinheit (34) dafür konfiguriert ist, die Verdrängung eines jeden der Hydraulikmotoren (14A, 14B) auf der Basis mindestens der Integrationsausgabeinformationen so zu bestimmen, dass ein Verteilungsverhältnis der Verdrängung eines ersten Hydraulikmotors der Hydraulikmotoren (14A, 14B) höher ist als eines zweiten Hydraulikmotors, der einen größeren integrierten Ausgabewert hat als der erste Hydraulikmotor.

4. Hydraulisches Getriebe (10) nach einem der Ansprüche 1 bis 3,
wobei die Betriebszustandsinformation eine Leistungsabgabeinformation enthält, die eine Leistungsabgabe von jedem von Generatoren (20A, 20B) angibt, die dafür konfiguriert sind, jeweils durch einen der Hydraulikmotoren (14A, 14B) angetrieben zu werden, und
wobei die Verdrängungsverteilungseinheit (34) dafür konfiguriert ist, die Verdrängung eines jeden der Hydraulikmotoren (14A, 14B) auf der Basis mindestens der Leistungsabgabeinformation so zu bestimmen, dass ein Gesamtbetrag der Leistungsabgabe in Bezug auf die Gesamtverdrängung Dₜₒₜₐₗ maximiert wird.

5. Hydraulisches Getriebe (10), umfassend:
eine Hydraulikpumpe (12), die dafür konfiguriert ist, durch eine mechanische Energie angetrieben zu werden, die in eine Drehwelle (8) eingespeist wird,
mehrere Hydraulikmotoren (14A, 14B), die jeweils eine verstellbare Verdrängung haben und dafür konfiguriert sind, durch ein druckbeaufschlagtes Öl von der Hydraulikpumpe (12) angetrieben zu werden, und
eine Steuereinheit (30) zum Steuern einer Verdrängung eines jeden der Hydraulikmotoren (14A, 14B),
wobei die Steuereinheit (30) enthält:
eine Gesamtverdrängungsbestimmungseinheit (32) zum Bestimmen einer Gesamtverdrängung Dₜₒₜₐₗ der Hydraulikmotoren (14A, 14B),
eine Verdrängungsverteilungseinheit (34), die dafür konfiguriert ist, die Gesamtverdrängung Dₜₒₜₐₗ zu jedem der Hydraulikmotoren (14A, 14B) auf der Basis einer Motorinformation zu verteilen, die eine inhärente Eigenschaft und/oder einen Betriebszustand eines jeden der Hydraulikmotoren (14A, 14B) angibt, und die Verdrängung eines jeden der Hydraulikmotoren (14A, 14B) zu bestimmen,
eine Befehlsausgabeeinheit (36), die dafür konfiguriert ist, einen Befehl für jeden der Hydraulikmotoren (14A, 14B) auszugeben, um die durch die Verdrängungsverteilungseinheit (34) bestimmte Verdrängung zu realisieren,
**dadurch gekennzeichnet, dass** die Motorinformation eine Information über eine verbotene Verdrängung enthält, die eine verbotene Verdrängung als die inhärente Eigenschaft eines jeden der Hydraulikmotoren (14A, 14B) angibt,
die Verdrängungsverteilungseinheit (34) dafür konfiguriert ist, die Verdrängung eines jeden der Hydraulikmotoren (14A, 14B) auf der Basis mindestens der Information über eine verbotene Verdrängung so zu bestimmen, dass die verbotene Verdrängung vermieden wird, und
die durch die Information über eine verbotene Verdrängung definierte verbotene Verdrängung eine Eigenfrequenz einer Drehwelle eines jeden der Hydraulikmotoren (14A, 14B) oder eine Eigenfrequenz einer Struktur um das hydraulische Getriebe herum anregt.

6. Hydraulisches Getriebe (10) nach einem der Ansprüche 1 bis 3 und 5,
wobei die Motorinformation eine Information über eine optimale Verdrängung als die inhärente Eigenschaft eines jeden der Hydraulikmotoren (14A, 14B) enthält, wobei die Information über eine optimale Verdrängung eine Kombination der Verdrängungen der Hydraulikmotoren (14A, 14B) angibt, die eine Maximierung eines Gesamtbetrages der Leistungsabgabe von jedem von Generatoren (20A, 20B) ermöglicht, die dafür konfiguriert sind, jeweils durch einen der Hydraulikmotoren (14A, 14B) angetrieben zu werden, und
wobei die Verdrängungsverteilungseinheit (34) dafür konfiguriert ist, die Verdrängung eines jeden der Hydraulikmotoren (14A, 14B) auf der Basis mindestens der Information über eine optimale Verdrängung zu bestimmen.

7. Hydraulisches Getriebe (10) nach einem der Ansprüche 1 bis 6, das ferner eine Hochdruckleitung (16) umfasst, die zwischen einem Auslass der Hydraulikpumpe (12) und einem Einlass eines jeden der Hydraulikmotoren (14A, 14B) angeordnet ist,
wobei die Gesamtverdrängungsbestimmungseinheit (32) dafür konfiguriert ist, die Gesamtverdrängung Dₜₒₜₐₗ der Hydraulikmotoren (14A, 14B) auf der Basis einer Summe
eines ersten Wertes, der gemäß einer Verdrängung der Hydraulikpumpe (12) definiert wird, und
eines zweiten Wertes, der gemäß einer Abweichung eines Druckmesswertes und eines Druckzielwertes der Hochdruckleitung (16) definiert wird,
zu bestimmen.

8. Hydraulisches Getriebe (10) nach Anspruch 7, wobei die Gesamtverdrängungsbestimmungseinheit (32) dafür konfiguriert ist, die Verdrängung der Hydraulikpumpe (12) gemäß einer Korrelation zwischen einer Drehzahl der Drehwelle (8) und einem Drehmoment der Hydraulikpumpe (12) zu bestimmen, und den ersten Wert gemäß der Verdrängung der Hydraulikpumpe (12) zu berechnen.

9. Hydraulisches Getriebe (10) nach einem der Ansprüche 1 bis 8, wobei die Verdrängungsverteilungseinheit (34) dafür konfiguriert ist, die Gesamtverdrängung Dₜₒₜₐₗ nur an arbeitende Hydraulikmotoren (14A, 14B) unter den Hydraulikmotoren auf der Basis einer Nichtarbeitsinformation zu verteilen, die einen Nichtarbeitszustand eines jeden der Hydraulikmotoren (14A, 14B) angibt.

10. Energieerzeugungsvorrichtung des Typs für erneuerbare Energien, umfassend:
mindestens einen Flügel (4),
eine Drehwelle (8), die dafür konfiguriert ist, durch eine erneuerbare Energie gedreht zu werden, die durch den mindestens einen Flügel (4) empfangen wird, und
das hydraulische Getriebe (10) nach einem der Ansprüche 1 bis 9.

## Revendications

1. Transmission hydraulique (10) comprenant :
une pompe hydraulique (12) configurée pour être entraînée par une énergie mécanique qui est appliquée à un arbre de rotation (8) ;
une pluralité de moteurs hydrauliques (14A, 14B), chacun ayant un déplacement variable et étant configuré pour être entraîné par une huile sous pression en provenance de la pompe hydraulique (12) ; et
un contrôleur (30) pour contrôler un déplacement de chacun des moteurs hydrauliques (14A, 14B),
dans laquelle le contrôleur (30) inclut :
une unité de détermination de déplacement total (32) pour déterminer un déplacement total Dₜₒₜₐₗ des moteurs hydrauliques (14A, 14B) ;
une unité de distribution de déplacement (34) configurée pour distribuer le déplacement total Dₜₒₜₐₗ à chacun des moteurs hydrauliques (14A, 14B) en se basant sur une information de moteur qui indique au moins une d'une propriété inhérente ou d'un état opérationnel de chacun des moteurs hydrauliques (14A, 14B) et pour déterminer le déplacement de chacun des moteurs hydrauliques (14A ; 14B) ;
une unité de sortie de commande (36) qui est configurée pour produire en sortie une commande pour chacun des moteurs hydrauliques (14A, 14B) de sorte à obtenir le déplacement déterminé par l'unité de distribution de déplacement (34) ;
**caractérisée en ce que** le contrôleur (30) inclut une unité d'obtention d'information d'état opérationnel (38) qui est configurée pour obtenir une information d'état opérationnel incluant une information de vibration, ladite information d'état opérationnel indiquant l'état opérationnel de chacun des moteurs hydrauliques (14A, 14B) alors que la transmission hydraulique (10) est actionnée,
l'information d'état opérationnel inclut une information de vibration qui indique une vibration de chacun des moteurs hydrauliques (14A, 14B), et
l'unité de distribution de déplacement (34) est configurée pour déterminer le déplacement de chacun des moteurs hydrauliques (14A, 14B) en se basant sur au moins l'information de vibration de sorte qu'une amplitude ou une fréquence de la vibration de chacun des moteurs hydrauliques (14A, 14B) se trouve dans une plage tolérable.

2. Transmission hydraulique (10) selon la revendication 1,
dans laquelle l'information d'état opérationnel inclut une information de déplacement variable qui indique une plage de déplacement variable de chacun des moteurs hydrauliques (14A, 14B), et
dans laquelle l'unité de distribution de déplacement (34) est configurée pour déterminer le déplacement de chacun des moteurs hydrauliques (14A, 14B) en se basant sur au moins l'information de déplacement variable de sorte que le déplacement se trouve à l'intérieur de la plage de déplacement variable.

3. Transmission hydraulique (10) selon la revendication 1 ou 2,
dans laquelle l'information d'état opérationnel inclut une information de sortie d'intégration qui indique une valeur intégrée de sortie de chacun des moteurs hydrauliques, et
dans laquelle l'unité de distribution de déplacement (34) est configurée pour déterminer le déplacement de chacun des moteurs hydrauliques (14A, 14B) en se basant sur au moins l'information de sortie d'intégration de sorte qu'un rapport de distribution du déplacement d'un premier moteur hydraulique des moteurs hydrauliques (14A, 14B) soit supérieur à un second moteur hydraulique qui a une valeur intégrée de sortie supérieure à celle du premier moteur hydraulique.

4. Transmission hydraulique (10) selon l'une quelconque des revendications 1 à 3,
dans laquelle l'information d'état opérationnel inclut une information de sortie de puissance qui indique une puissance de sortie de chacun des générateurs (20A, 20B) qui sont configurés pour être entraînés par chacun des moteurs hydrauliques (14A, 14B) respectivement, et
dans laquelle l'unité de distribution de déplacement (34) est configurée pour déterminer le déplacement de chacun des moteurs hydrauliques (14A, 14B) en se basant sur au moins l'information de puissance de sortie de sorte qu'une quantité totale de la sortie de puissance soit maximisée par rapport au déplacement total Dₜₒₜₐₗ.

5. Transmission hydraulique (10) comprenant :
une pompe hydraulique (12) configurée pour être entraînée par une énergie mécanique qui est appliquée à un arbre de rotation (8) ;
une pluralité de moteurs hydrauliques (14A, 14B) ayant chacun un déplacement variable et étant configurés pour être entraînés par une huile pressurisée en provenance de la pompe hydraulique (12) ; et
un contrôleur (30) pour contrôler un déplacement de chacun des moteurs hydrauliques (14A, 14B),
dans laquelle le contrôleur (30) inclut :
une unité de détermination de déplacement total (32) pour déterminer un déplacement total Dₜₒₜₐₗ des moteurs hydrauliques (14A, 14B);
une unité de distribution de déplacement (34) configurée pour distribuer le déplacement total Dₜₒₜₐₗ à chacun des moteurs hydrauliques (14A, 14B) en se basant sur une information de moteur qui indique au moins une d'une propriété inhérente ou d'un état opérationnel de chacun des moteurs hydrauliques (14A, 14B) et pour déterminer le déplacement de chacun des moteurs hydrauliques (14A, 14B) ;
une unité de sortie de commande (36) qui est configurée pour produire en sortie une commande pour chacun des moteurs hydrauliques (14A, 14B) de sorte à obtenir le déplacement déterminé par l'unité de distribution de déplacement (34) ;
**caractérisée en ce que** l'information de moteur inclut une information de déplacement interdit qui indique un déplacement interdit en tant que la propriété inhérente de chacun des moteurs hydrauliques (14A, 14B),
l'unité de distribution de déplacement (34) est configurée pour déterminer le déplacement de chacun des moteurs hydrauliques (14A, 14B) en se basant sur au moins l'information de déplacement interdit de sorte à éviter le déplacement interdit ; et
le déplacement interdit défini par l'information de déplacement interdit excite une fréquence propre d'un arbre de rotation de chacun des moteurs hydrauliques (14A, 14B) ou une fréquence propre d'une structure autour de la transmission hydraulique.

6. Transmission hydraulique (10) selon l'une quelconque des revendications 1 à 3, et 5,
dans laquelle l'information de moteur inclut une information de déplacement optimum en tant que propriété inhérente de chacun des moteurs hydrauliques (14A, 14B), l'information de déplacement optimum indiquant une combinaison des déplacements des moteurs hydrauliques (14A, 14B) qui permet la maximisation d'une quantité totale de puissance de sortie de chacun des générateurs (20A, 20B) qui sont configurés pour être entraînés par chacun des moteurs hydrauliques (14A, 14B), respectivement,
et dans laquelle l'unité de distribution de déplacement (34) est configurée pour déterminer le déplacement de chacun des moteurs hydrauliques (14A, 14B) en se basant sur au moins l'information de déplacement optimum.

7. Transmission hydraulique (10) selon l'une quelconque des revendications 1 à 6, comprenant en outre une conduite haute pression (16) prévue entre une sortie de la pompe hydraulique (12) et une entrée de chacun des moteurs hydrauliques (14A, 14B),
dans laquelle l'unité de détermination de déplacement total (32) est configurée pour déterminer le déplacement total Dₜₒₜₐₗ des moteurs hydrauliques (14A, 14B) en se basant sur une somme de :
une première valeur qui est définie selon un déplacement de la pompe hydraulique (12) ; et
une seconde valeur qui est définie selon une déviation d'une valeur de mesure de pression et une valeur cible de pression de la conduite haute pression (16).

8. Transmission hydraulique (10) selon la revendication 7, dans laquelle l'unité de détermination de déplacement total (32) est configurée pour déterminer le déplacement de la pompe hydraulique (12) selon une corrélation entre une vitesse de rotation de l'arbre de rotation (8) et un couple de la pompe hydraulique (12), et pour calculer la première valeur selon le déplacement de la pompe hydraulique (12).

9. Transmission hydraulique (10) selon l'une quelconque des revendications 1 à 8, dans laquelle l'unité de distribution de déplacement (34) est configurée pour distribuer le déplacement total Dₜₒₜₐₗ aux moteurs hydrauliques opérationnels (14A, 14B) uniquement parmi les moteurs hydrauliques en se basant sur une information de non-opération qui indique un état non opérationnel de chacun des moteurs hydrauliques (14A, 14B).

10. Appareil de génération de puissance d'un type à énergie renouvelable comprenant :
au moins une pale (4) ;
un arbre de rotation (8) qui est configuré pour être mis en rotation par une énergie renouvelable reçue par l'au moins une pale (4) ; et
la transmission hydraulique (10) selon l'une quelconque des revendications 1 à 9.
